# EUROPÄISCHE PATENTANMELDUNG

(11) **EP 2 495 468 A2**
(43) Veröffentlichungstag der Anmeldung: **05.09.2012**
(21) Anmeldenummer: 12153264.2
(22) Anmeldetag: 31.01.2012
(51) Int. Cl.: F16D 1/06, F16H 57/08

(54) **Planetengetriebe mit Wellen-Naben-Verbindung**

(30) Priorität: 01.03.2011 DE 102011004908
(71) Anmelder: Schaeffler Technologies GmbH & Co. KG, 91074 Herzogenaurach (DE)
(72) Erfinder: During, Tom-Michel, 91052 Erlangen (DE); Jurjanz, Ramon, 91058 Erlangen (DE); Wurzberger, Philip, 90429 Nürnberg (DE)

(57) **Zusammenfassung**

Der Erfindung liegt die Aufgabe zugrunde, ein Planetengetriebe in einer kompakten und zugleich fertigungstechnisch günstigen Bauweise vorzuschlagen.

Hierzu wird ein Planetengetriebe 1 mit einer ersten drehmomentübertragenden Komponente 2, welche mit einem Wellenabschnitt 4 drehfest gekoppelt ist, mit einer zweiten drehmomentübertragenden Komponente 9,15, welche mit einem Nabenabschnitt 10 drehfest gekoppelt ist, vorgeschlagen, wobei der Wellenabschnitt 4 und der Nabenabschnitt 10 über eine Formschlussverbindung in Bezug auf eine gemeinsame Drehachse 6 drehfest miteinander gekoppelt sind, und wobei der Wellenabschnitt 4 und/oder der Nabenabschnitt 10 in einer Schnittebene senkrecht zu der gemeinsamen Drehachse 6 als Formschlusskontur eine Polygonform 7a,b,c,8a,b,c aufweist bzw. aufweisen und/oder dass die Formschlussverbindung als eine Polygonverbindung ausgebildet ist.

## Beschreibung

Die Erfindung betrifft ein Planetengetriebe mit einer ersten drehmomentübertragenden Komponente, welche mit einem Wellenabschnitt drehfest gekoppelt ist, und mit einer zweiten drehmomentübertragenden Komponente, welche mit einem Nabenabschnitt drehfest gekoppelt ist, wobei der Wellenabschnitt und der Nabenabschnitt über eine Formschlussverbindung in Bezug auf eine gemeinsame Drehachse drehfest miteinander gekoppelt sind.

Planetengetriebe werden zum Beispiel in der Kraftfahrzeugtechnik oftmals eingesetzt, um Drehmomente zu über- oder zu untersetzen, um Drehmomente auf unterschiedliche Räder einer Achse oder auf unterschiedliche Achsen zu verteilen. Planetengetriebe weisen als typische Komponenten Planetenräder auf, welche in einem Teilkreis auf einem Planetenträger angeordnet sind und mit einem zentralen Sonnenrad kämmen. Der Planetenträger kann wiederum mit einem Hohlrad drehfest gekoppelt sein, welches bei manchen Ausführungsformen ebenfalls mit den Planetenrädern kämmt. Je nach Anwendungsgebiet sind Planetengetriebe mit mehreren Planetenradsätzen oder mehrstufige Planetengetriebe bekannt.

Die Druckschrift DE 10 2005 001 832 A1 offenbart beispielsweise ein Automatgetriebe, insbesondere für Kraftfahrzeuge, welches mindestens einen Planetenträger und mindestens ein benachbartes Schaltelement aufweist, wobei der Planetenträger über eine Verzahnung drehfest mit dem über eine ebenfalls verzahnte Nabe verfügenden Schaltelement drehfest gekoppelt ist.

Der Erfindung liegt die Aufgabe zugrunde, ein Planetengetriebe in einer kompakten und zugleich fertigungstechnisch günstigen Bauweise vorzuschlagen. Diese Aufgabe wird durch ein Planetengetriebe mit den Merkmalen des Anspruchs 1 gelöst. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird somit ein Planetengetriebe vorgestellt, welches in der allgemeinsten Ausprägung in einer beliebigen Bauform über eine beliebige Auswahl von typischen drehmomentübertragenden Komponenten, wie zum Beispiel Sonnenrädern, Hohlrädern oder Planetenträgern verfügt, welche zur Übertragung eines Drehmoments miteinander verkoppelt sind.

Eine erste beliebig aus den genannten Komponenten ausgewählte drehmomentübertragende Komponente ist mit einem Wellenabschnitt drehfest gekoppelt. Insbesondere ist die erste drehmomentübertragende Komponente mit dem Wellenabschnitt in Bezug auf eine Drehachse drehfest gekoppelt. Unter einem Wellenabschnitt wird vorzugsweise ein zapfenähnlicher Abschnitt verstanden. Eine zweite beliebig aus den genannten Komponenten ausgewählte drehmomentübertragende Komponente ist mit einem Nabenabschnitt drehfest gekoppelt, wobei diese Kopplung vorzugsweise in Bezug auf die zuvor genannte Drehachse vorliegt. Unter einem Nabenabschnitt wird ein Teil einer Nabe verstanden, also ein Bauteilabschnitt zur Befestigung eines Bauteils auf einer Welle oder dem Wellenabschnitt. Insbesondere weist der Nabenabschnitt eine Durchgangsöffnung zur Aufnahme des Wellenabschnitts auf.

Der Wellenabschnitt und der Nabenabschnitt sind über eine Formschlussverbindung in Bezug auf eine gemeinsame Drehachse, vorzugsweise der Drehachse der drehfesten Kopplung zwischen der ersten drehmomentübertragenden Komponente und dem Wellenabschnitt und/oder zwischen der zweiten drehmomentübertragenden Komponente und dem Nabenabschnitt, miteinander gekoppelt. Insbesondere sind über die Formschlussverbindung die erste drehmomentübertragende Komponente und die zweite drehmomentübertragende Komponente miteinander in Bezug auf die gemeinsame Drehachse drehfest gekoppelt.

Im Rahmen der Erfindung wird vorgeschlagen, dass der Wellenabschnitt und/oder der Nabenabschnitt in einer Schnittebene senkrecht zu der gemeinsamen Drehachse als Formschlusskontur für die Formschlussverbindung eine Polygonform aufweist bzw. aufweisen. Unter der Formschlusskontur wird insbesondere die Innenkontur der Durchgangsöffnung in dem Nabenabschnitt zur Aufnahme des Wellenabschnitts und/oder die Außenkontur des Wellenabschnitts verstanden und zwar in einer Schnittebene, welche durch die Formschlussverbindung verläuft. Insbesondere sind die Formschlusskonturen des Wellenabschnitts und des Nabenabschnitts komplementär zueinander ausgeführt.

Unter einer Polygonform wird vorzugsweise ein Mehreck, insbesondere als ein konvexes Mehreck mit abgerundeten oder zurückgesetzten Eckbereichen und gekrümmten, insbesondere kreisbogenförmigen Seiten verstanden. Die Polygonform weist mindestens oder genau drei Eckbereiche auf.

Anders ausgedrückt, ist die Formschlussverbindung als eine Polygonverbindung ausgebildet. Die Vorteile von Polygonverbindungen sind insbesondere, dass diese selbstzentrierend sind, eine sehr geringe Neigung zur Kerbwirkung haben, gute dynamische Eigenschaft aufweisen und sehr hohe Drehmomente aufnehmen können. Ferner ist die Formschlussverbindung als eine lösbare Verbindung ausgebildet, so dass die Montage des Planetengetriebes ermöglicht oder erleichtert wird.

Die Grundform der Polygonform ist vorzugsweise als ein regelmäßiges Polygon, insbesondere als ein Dreieck oder als ein Quadrat ausgebildet. Bei abgewandelten Ausführungsformen können jedoch auch Mehrecke mit 5, 6, 7, 8, oder mehr Eckbereichen eingesetzt werden. Besonders bevorzugt ist die Polygonform und/oder die Polygonverbindung gemäß der DIN32711 ausgebildet und insbesondere als ein dort definiertes P3G-Dreieck oder P4C-Viereck realisiert. Besonders bevorzugt ist der Wellenabschnitt als ein Gleichdick ausgebildet.

Bei einer bevorzugten Ausführungsform der Erfindung ist der Wellenabschnitt - beispielsweise ausgebildet als ein Wellenzapfen- aus einem Vollmaterial gefertigt. Der Wellenabschnitt ist somit maßgeblich durch abtragende oder trennende Verfahren hergestellt.

Bei einer bevorzugten Ausführungsform ist die erste drehmomentübertragende Komponente als ein Sonnenrad in dem Planetengetriebe ausgebildet, welches mit Planetenrädern kämmt, wobei der Wellenabschnitt wahlweise einstückig mit dem Sonnenrad ausgebildet ist oder mit diesem direkt oder unter Zwischenschaltung weiterer Bauteile verbunden ist. Im letztgenannten Fall kann der Wellenabschnitt beispielsweise als Teil eines Wellenzapfens ausgebildet sein, auf dem das Sonnenrad drehfest angeordnet ist, so dass Wellenabschnitt und Sonnenrad drehfest miteinander gekoppelt sind.

In einer möglichen Weiterbildung der Erfindung, wobei besonders bevorzugt Wellenabschnitt und Sonnenrad einstückig miteinander ausgebildet sind, ist zwischen Sonnenrad und Wellenabschnitt eine Umlauffläche für ein Lager, insbesondere für ein Wälzlager, bereitgestellt. Damit ist die erste drehmomentübertragende Komponente als hochintegriertes Bauteil ausgebildet.

Dagegen ist es bevorzugt, dass der Nabenabschnitt als ein Umformteil oder ein Teilabschnitt davon ausgebildet ist. Insbesondere ist der Nabenabschnitt spanlos hergestellt. Besonders bevorzugt erfolgt die Fertigung des Nabenabschnitts über eine Kaltumformung. Diese Art der Fertigung ermöglicht gerade bei einer hohen Stückzahl niedrige Produktionskosten.

Besonders bevorzugt ist, dass die zweite drehmomentübertragende Komponente als ein Planetenträger oder als ein Hohlrad ausgebildet ist, wobei der

Nabenabschnitt einstückig mit dem Planetenträger bzw. dem Hohlrad ausgebildet ist oder mit diesem drehfest in Bezug auf die gemeinsame Drehachse verbunden ist.

In einer möglichen Ausgestaltung ist vorgesehen sein, dass der Nabenabschnitt als Teilbereich eines Deckels für den Planetenträger oder das Hohlrad ausgebildet ist, wobei der Deckel als ein Umformteil ausgebildet ist. In dieser Ausgestaltung kann die konstruktive Stabilität des Deckels durch ergänzende Umformbereiche, wie. z.B. Sicken erhöht werden.

Besonders bevorzugt ist der Deckel als eine Seitenscheibe des Planetenträgers ausgebildet, wobei die Bolzen von Planetenrädern des Planetenträgers in der Seitenscheibe festgelegt sind.

Bei einer möglichen konstruktiven Realisierung ist der Nabenabschnitt in dem Umformteil, insbesondere in dem Deckel auskragend angeordnet, so dass dieser in das Planetengetriebe hineinragen kann, um die Baugröße des Planetengetriebes in axialer Richtung zu der gemeinsamen Drehachse oder den Abstand zwischen Sonnenrad und Wellenabschnitt gering zu halten.

Bei möglichen Ausgestaltungen sind Wellenabschnitt und/oder Nabenabschnitt gehärtet.

Bei einer besonders bevorzugten Ausführungsform der Erfindung ist das Planetengetriebe als ein Differentialgetriebe für ein Kraftfahrzeug ausgebildet. Hierbei kann es sich um ein Achsdifferentialgetriebe, welches ein Drehmoment auf zwei Räder einer Achse verteilt, oder um ein Längsdifferential handeln, welches das Drehmoment auf zwei unterschiedliche Achsen verteilt. Es ist auch möglich, dass das Planetengetriebe als ein Überlagerungsgetriebe ausgebildet ist, welche einem Hauptdrehmoment ein Überlagerungsdrehmoment überlagert, um zum Beispiel eine aktive Momentensteuerung oder ein Hybridgetriebe umzusetzen.

Bei einer bevorzugten Ausbildung der Erfindung ist das Planetengetriebe als ein Stirnradgetriebe, insbesondere ein Stirnraddifferential ausgebildet. In dieser Ausbildung ist es zudem bevorzugt, dass Gehäuseabschnitte, wie z.B. der Planetenträger als Blechformteile ausgebildet sind.

Weitere Merkmale, Vorteile und Wirkungen der Erfindung ergeben sich aus der nachfolgenden Beschreibung eines bevorzugten Ausführungsbeispiels der Erfindung. Dabei zeigen:
Figuren 1 a, b eine schematische dreidimensionale Darstellung zweier drehmomentübertragenden Komponenten eines Planetengetriebes in Explosionsdarstellung und zusammengesetzter Darstellung;
Figuren 2 a, b eine Draufsicht und eine Unteransicht auf eine der Komponenten in den Figuren 1 a, 1 b;
Figuren 3 a, b eine schematische dreidimensionale Darstellung eines Planetengetriebes als ein Ausführungsbeispiel der Erfindung, in das zumindest eine der beiden Komponenten aus den Figuren 1 a, b eingesetzt ist.

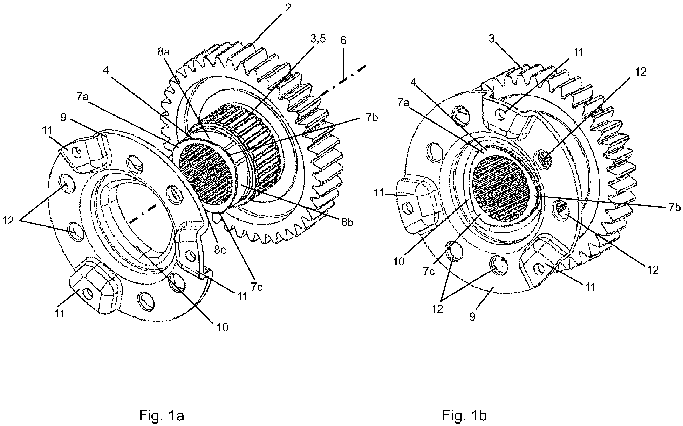

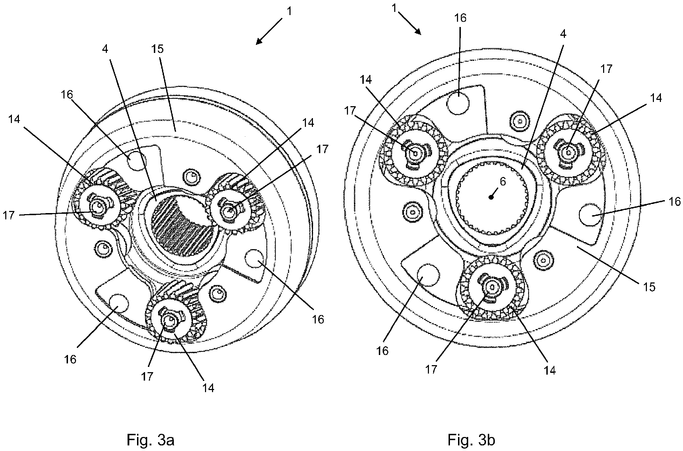

Die Figuren 1 a, b zeigen in einer schematischen dreidimensionalen Darstellung Teile eines Planetengetriebes 1 (Figur 3 a, b). Das erste Teil ist als eine drehmomentübertragende Komponente in Form eines Sonnenrads 2 ausgebildet, welches drehfest auf einem Wellenzapfen 3 sitzt, der endseitig einen Wellenabschnitt 4 trägt. Bei diesem Ausführungsbeispiel ist das Sonnenrad 2 mit dem Wellenzapfen 3 und dem Wellenabschnitt 4 einstückig ausgebildet und über trennende oder abtragende Verfahren aus Vollmaterial gefertigt. Das Sonnenrad 2 ist mit einer umlaufenden Stirnverzahnung versehen, zwischen der Stirnverzahnung und dem Wellenabschnitt 4 ist auf dem Sonnenrad 2 auf dem Wellenzapfen 3 ein Wälzlager 5 angeordnet. Das Sonnenrad 2 ist zusammen mit dem Wellenzapfen 3 und dem Wellenabschnitt 4 in dem Planetengetriebe um eine Drehachse 6 drehbar angeordnet.

Der Wellenabschnitt 4 ist als eine Polygonwelle ausgebildet und weist in einem Querschnitt senkrecht zur Drehachse 6 als Außenkontur eine Polygonform auf. Die Polygonform ist in der Grundform dreieckig ausgebildet, wobei die drei Eckbereiche 7 a, b, c in Umlaufrichtung um die Drehachse 6 regelmäßig voneinander beabstandet sind. Zwischen den Eckbereichen 7 a, b, c erstrecken sich Seitenflächen 8 a, b, c, welche im genannten Querschnitt als Abschnitte von Kreislinien ausgebildet sind, wobei die Kreislinien jeweils den gleichen Radius aufweisen. Die Polygonform wird innerhalb der DIN 32711 auch als P3G-Dreieck bezeichnet.

Wie sich insbesondere aus der Figur 1 b ergibt, wird auf das Sonnenrad 2 ein Deckel 9 aufgesetzt, welcher einen Nabenabschnitt 10 trägt. Der Deckel 9 ist in seiner Grundform als eine Ringscheibe ausgebildet, wobei der Nabenabschnitt 10 mittig oder zentral angeordnet ist und sich in Richtung des Sonnenrades 2 auskragend erstreckt. Ferner weist der Deckel 9 drei Gehäuseabschnitte 11 auf, welche sich sickenähnlich in die entgegengesetzte Richtung erstrecken. Der Deckel 9 ist als ein Umformteil hergestellt, so dass sowohl der Nabenabschnitt 10 als auch die Gehäuseabschnitte 11 umformtechnisch, spanlos und insbesondere kalt umgeformt hergestellt werden. Zwischen den Gehäuseabschnitten 11 weist der Deckel 9 Durchgangsöffnungen 12 auf.

Der Nabenabschnitt 10 weist eine Durchgangsöffnung auf, welche ebenfalls in Polygonform ausgebildet ist und komplementär zu dem Wellenabschnitt 4 und dessen Polygonform geformt ist. Wird der Deckel 9 auf den Wellenabschnitt 4 des Sonnenrades 2 aufgesetzt, so ergibt sich ein drehfester Formschluss in Bezug auf die Drehachse 6. Eine derartige, sogenannte Polygonverbindung erlaubt eine Übertragung von hohen Drehmomenten und ist zudem selbstzentrierend. Weitere Vorteile ergeben sich daraus, dass der Nabenabschnitt 10 auch gehärtet ausgeführt sein kann, ohne dass die Gefahr besteht, dass die Form des Nabenabschnitts 10 durch den Härteprozess zu stark verändert wird, da die Toleranzen zwischen Nabenabschnitt 10 und Wellenabschnitt 4 vergleichsweise groß gewählt werden dürfen. Der Deckel 9 in der Figur 1 b ist auf dem Sonnenrad 2 aufgesetzt zu erkennen.

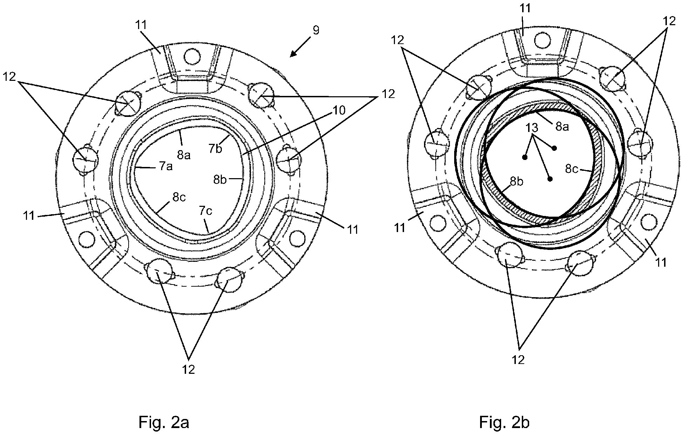

Die Figuren 2 a, 2 b zeigen nochmals den Deckel 9, jedoch in einer Draufsicht bzw. Unteransicht. Zeichnerisch sind in der Figur 2b drei Kreise mit Mittelpunkten 13 angedeutet, welche die Konturen der Seitenflächen 8 a, b, c definieren. Die Kreise der Mittelpunkte 13 weisen jeweils den gleichen Radius auf, die Mittelpunkt der Kreise sind innerhalb des Wellenabschnitts 4 in einem Dreieck angeordnet.

In den Figuren 3 a, b ist das Planetengetriebe 1 in Stirnradbauweise in einer schematischen dreidimensionalen Darstellung als ein Ausführungsbeispiel der Erfindung gezeigt. Das Planetengetriebe 1 kann als ein Differentialgetriebe mit aktiver Momentensteuerung ausgebildet sein. In dem Planetengetriebe 1 ist das Sonnenrad 2 eingesetzt, wobei nur der Wellenabschnitt 4 zu erkennen ist. Das Planetengetriebe umfasst einen Satz Planetenräder 14, welche auf einem Planetenträger 15 angeordnet sind. Es ist darauf hinzuweisen, dass das Sonnenrad 2 auf der den Planetenrädern 14 abgewandten Seite des Planetengetriebes 1 angeordnet ist und dort mit anderen Planetenrädern (nicht dargestellt) kämmt. Der Deckel 9 (Figuren 1 a, b, 2 a, b) ist konstruktiv so ausgebildet, dass dieser auf den Planetenträger 15 aufgesetzt werden kann und über die Durchgangsöffnungen 12 mittels Schrauben oder Nieten mit Aufnahmen 16 in dem Planetenträger 15 drehfest verbunden werden kann.

Die Gehäuseabschnitte 11 dienen im montierten Zustand zur Aufnahme der Planetenräder 14 bzw. als Abstützung für die Bolzen 17 der Planetenräder 14, so dass der Deckel 9 einen Teil des Planetenträgers 15 bildet. Bei der Montage wird der Deckel 9 drehfest mit dem Planetenträger 15 verbunden und über die aus Wellenabschnitt 4 und Nabenabschnitt 10 gebildete Formschlussverbindung mit dem Sonnenrad 2 drehfest verbunden. Die Formschlussverbindung ist aufgrund der auskragenden Position des Nabenabschnitts 10 in dem Planetengetriebe 1 zurückgesetzt angeordnet.

### Bezugszeichenliste

- 1: Planetengetriebe
- 2: Sonnenrad
- 3: Wellenzapfen
- 4: Wellenabschnitt
- 5: Wälzlager
- 6: Drehachse
- 7 a, b, c: Eckbereiche
- 8 a, b, c: Seitenflächen
- 9: Deckel
- 10: Nabenabschnitt
- 11: Gehäuseabschnitte
- 12: Durchgangsöffnungen
- 13: Mittelpunkte
- 14: Planetenräder
- 15: Planetenträger
- 16: Aufnahmen
- 17: Bolzen

## Patentansprüche

1. Planetengetriebe (1) mit einer ersten drehmomentübertragenden Komponente (2), welche mit einem Wellenabschnitt (4) drehfest gekoppelt ist, mit einer zweiten drehmomentübertragenden Komponente (9,15), welche mit einem Nabenabschnitt (10) drehfest gekoppelt ist, wobei der Wellenabschnitt (4) und der Nabenabschnitt (10) über eine Formschlussverbindung in Bezug auf eine gemeinsame Drehachse (6) drehfest miteinander gekoppelt sind, **dadurch gekennzeichnet, dass** der Wellenabschnitt (4) und/oder der Nabenabschnitt (10) in einer Schnittebene senkrecht zu der gemeinsamen Drehachse (6) als Formschlusskontur eine Polygonform (7a,b,c,8a,b,c) aufweist bzw. aufweisen und/oder dass die Formschlussverbindung als eine Polygonverbindung ausgebildet ist.

2. Planetengetriebe (1) nach Anspruch 1, **dadurch gekennzeichnet, dass** die Polygonform auf einem regelmäßigen Polygon als Grundform beruht.

3. Planetengetriebe (1) nach Anspruch 1 oder 2, **dadurch gekennzeichnet, dass** die Polygonform gemäß der DIN 32711 ausgebildet ist und/oder dass die Polygonform als ein Dreieck, insbesondere als ein P3G-Dreieck, oder als ein Viereck, insbesondere als ein P4C-Viereck ausgebildet ist.

4. Planetengetriebe (1) nach einem der vorhergehenden Ansprüche, **dadurch gekennzeichnet, dass** der Wellenabschnitt (4) aus einem Vollmaterial gefertigt ist.

5. Planetengetriebe (1) nach einem der vorhergehenden Ansprüche, **dadurch gekennzeichnet, dass** die erste drehmomentübertragende Komponente als ein Sonnenrad (2) ausgebildet ist.

6. Planetengetriebe (1) nach Anspruch 5, **dadurch gekennzeichnet, dass** zwischen Sonnenrad (2) und Wellenabschnitt (4) eine Umlauffläche für ein Lager (5) bereitgestellt ist.

7. Planetengetriebe (1) nach einem der vorhergehenden Ansprüche, **dadurch gekennzeichnet, dass** der Nabenabschnitt (10) als ein Umformteil oder ein Teilabschnitt davon ausgebildet ist.

8. Planetengetriebe (1) nach einem der vorhergehenden Ansprüche, **dadurch gekennzeichnet, dass** die zweite drehmomentübertragende Komponente als ein Planetenträger (15) und/oder als ein Hohlrad ausgebildet ist.

9. Planetengetriebe (1) nach einem der vorhergehenden Ansprüche, **dadurch gekennzeichnet, dass** der Nabenabschnitt (10) als Teilabschnitt eines Deckels (9) für einen Planetenträger (15) oder ein Hohlrad ausgebildet ist.

10. Planetengetriebe (1) nach einem der vorhergehenden Ansprüche **dadurch gekennzeichnet, dass** das Planetengetriebe (1) für ein Fahrzeug, insbesondere als Achsdifferential, Längsdifferential, Überlagerungsgetriebe, Ravigneaux-Satz oder Hybridgetriebe ausgebildet ist.
